# EUROPEAN PATENT SPECIFICATION

(11) **EP 4 193 444 B1**
(45) Date of publication and mention of the grant of the patent: **18.06.2025**
(21) Application number: 21856900.2
(22) Date of filing: 25.12.2021
(51) Int. Cl.: H02J 3/38, H02J 3/32

(54) **APPARATUS FOR INCREASING SERVICE LIFE AND FLEXIBILITY OF ELECTRIC ENERGY ROTATING SOURCE AND METHOD FOR CONTROL OF THE SAME**
VORRICHTUNG ZUR ERHÖHUNG DER LEBENSDAUER UND FLEXIBILITÄT EINER ROTIERENDEN ELEKTRISCHEN ENERGIEQUELLE UND VERFAHREN ZUR STEUERUNG DAVON
APPAREIL POUR AUGMENTER LA DURÉE DE VIE ET LA FLEXIBILITÉ D'UNE SOURCE DE ROTATION D'ÉNERGIE ÉLECTRIQUE ET SON PROCÉDÉ DE COMMANDE

(30) Priority: 29.12.2020 CZ 20200725
(43) Date of publication of application: 14.06.2023
(73) Proprietor: Západoceská univerzita v Plzni, 301 00 Plzen (CZ)
(72) Inventor: PEROUTKA, Zdenek, 31200 Plzen (CZ); SIROVÝ, Martin, 33442 Chlumcany (CZ); VINS, Martin, 43111 Jirkov (CZ)
(74) Representative: Zmeskal, Lukas
(86) International application number: PCT/CZ2021/050158
(87) International publication number: WO 2022/144051

(56) References cited:
- US-A1- 2010 256 970
- US-A1- 2018 090 936

## Description

### Field of the invention

The present invention relates to a method of controlling an apparatus for increasing service life and flexibility of electric energy rotating sources and an apparatus for carrying out the method of control for increasing service life and flexibility of the electric energy rotating source - the sources that contain at least one electric generator powered by a mechanical energy source.

### Background of the invention

The electric energy sources, which contain at least one electric generator powered by the mechanical energy source, are the grounds of worldwide electricity production. Typically, these are a turbine-generator unit in thermal power plants. These rotating sources are unable to respond quickly to dynamic states in the grid. Frequency of these dynamic states increases hand in hand with development of difficult-to-predict renewable electric energy sources, or as a result of local overloading of a power system. The consequence is increased electrical and mechanical stresses applied on these power sources with an impact on their service life.

At present, the electric energy rotating sources are the ground of a wide range of power plants and heating plants - from conventional fossil fuel power plants and heating plants (combined cycle, coal, diesel power plants) through nuclear power plants and hydroelectric power plants. A common denominator of these rotating sources is the mechanical energy source (usually a turbine or combustion engine) mechanically coupled to an electric generator. These sources are connected to the power system and usually connected to a system of supporting services for keeping the power system stable (primary and secondary power control, minute back-ups, and more) and for securing a power balance. The control dynamics of these sources is limited by physical limits on the side of the mechanical, or thermal energy source in case of steam turbines (in particular due to permitted temperature gradients of materials used). Operating the sources at the very border of physical limits due to increasing demands for the control properties of these sources results in substantial reduction of their service life.

There may be many negative transients in the power system (typically due to reconfiguration of the power grid while stabilizing the power flows or switching high grid loads with low short-circuit impedance) acting directly on the connected electric energy rotating sources in the form of their increased electromechanical stress (increased vibration, voltage and current stress). These negative transients are much faster than the control capabilities of the mechanical energy sources used. Therefore, classic rotating sources cannot respond to the transients, or compensate them effectively.

Disclosed are technical solutions based on an accumulation element (usually an electrochemical accumulator) and an electronic power converter, e.g., in US 2018/0145511 A1. The elements are coupled to the power plant service consumption systems and designed to increase flexibility of the power control of the power plant, or for provision of back-up power. A similar technical solution, which increases flexibility of the power control of a power plant, is disclosed in utility model CZ 30903 U1, which uses an accumulation element with an electronic power converter connected directly to a common power node with a generator. Furthermore, there are documents dealing with the power balance and flexibility of a thermal power plant with the use of a superconductive magnetic energy accumulation element, e.g., US 005699666 A. Other solutions use the accumulation element directly connected to the power system, e.g., EP 2224570 A2. It improves stability of the power system based on power supplies or consumption at a frequency deviation. Document US 2015/0028675 A1 discloses use of a centralized energy storage for stabilization of a whole power system. Likewise, CN 111952998 A discloses a mass accumulator storage provided with a multi-port power converter, through which the storage is connected to alternating electric grid, and may optionally be connected to a renewable electric energy source (RES - e.g., photovoltaics). The accumulators or super-capacitors are used as e.g., disclosed in CN 111884253 A for hybrid electric energy sources, consisting of the renewable electric energy sources (RES), in particular of combination of photovoltaics and wind power plant. Disclosed in JP 2001157364 A is an active power filter, i.e., AC/DC converter (voltage-source inverter) connected on the AC and DC part to the AC power grid and the accumulator, respectively, where the accumulator is used as an electric energy battery for operation of a filter. The combination of a generator and power semiconductor converter is known from the wind power plants. Disclosed in EP 2747258 A2 is a wind power plant containing an electric generator and a throughput power semiconductor converter, which provides connection of the generator to the AC electric grid via an input converter (grid) transformer. WO 2020100372 A1 discloses a wind power plant containing an electric generator and throughput indirect frequency converter, which provides connection of the generator to the AC electric grid, and in which DC circuit, there may be an apparatus installed for accumulation of electric energy. However, these technical solutions concentrate on the issues related to the power control or power back-up. They do not mention use of an accumulation element and an electronic power converter in order to provide an active safeguard of a rotating source against negative electromechanical events from the power system.

US 2018/090936 A1 relates to an energy storage which is configured to emulate the behaviour of traditional synchronous generators to provide dynamic frequency control support by adding inertia to a microgrid during disturbances. Design parameters such as the maximum load change and an allowable frequency deviation are provided to a numerical model in order to determine an angular momentum of the energy storage which is used to control the output power of the energy storage.

US 2010/256970 A discloses a conditioning device for power supply networks wherein an energy storage is controlled to provide unbalance compensation, harmonic compensation and synchronous machine simulation.

Also known are passive generator safeguards (the safeguards that evaluate short-circuits and earth connection, and safeguards that evaluate abnormal operation states) that disconnect the generator from the power system when a hazardous state is detected. By definition, these safeguards are unable to actively intervene and mitigate or eliminate negative electromechanical transients acting on the electric energy rotating sources.

The technical solution described below actively safeguards the electric energy rotating source against negative transients and increases its service life and power flexibility.

### Summary

The present invention is defined by independent claims 1 and 3. The present disclosure discloses a technical solution of a unique connection and method of control for increasing the service life and flexibility of an electric energy rotating source. The apparatus comprises the electric energy rotating source with an electric generator connected to a mechanical energy source, a power system interface, a power semiconductor converter, an electric energy accumulation device, a micro-grid, a control system with a rotating source active safeguard and a power controller, and a measurement block.

The electric energy rotating source and the power semiconductor converter output are jointly connected to the power system interface. The power semiconductor converter input is connected to the electric energy accumulation device. The electric generator, the mechanical energy source, the power semiconductor converter, the electric energy accumulation device, the control system, the measurement block, and the power system interface jointly form the micro-grid. The micro-grid is adapted for control by a control system.

The control system includes an active safeguard of the rotating source against transient electromechanical stress. The active safeguard refers to an apparatus, which based on measuring of electric voltages and currents, generates voltage and current components in the power system interface that counteract a transient that negatively influences the service life of the rotating source. The active safeguard counteracts current and torque surges caused by voltage or current oscillations. To do so, it uses the measurement block in the power system interface and a numerical model of the electric energy rotating source. By solving a system of differential equations, the numerical model evaluates electric and mechanical stress of the electric energy rotating source. The active safeguard generates the voltage and current components using the power semiconductor converter and the electric energy accumulation device. To a maximum extent possible, the negative transients and their impact on the connected electric energy rotating source are mitigated or eliminated. Furthermore, the control system includes a power controller. The measuring inputs for the active safeguard and the power controller are connected to the measurement block. The measurement block is connected to the power system interface. The micro-grid is connected to the power system through the power system interface.

The electric energy accumulation device refers to a device being able to store and then supply electric energy - typically the electrochemical accumulators or a mechanical energy accumulator (e.g., a flywheel).

The power semiconductor converter refers to an electronic device being able to change the characteristics and parameters of electric energy. It is typically used for change the characteristics of electric energy from AC to DC (also called a rectifier) or from DC characteristics to AC (also called inverter). The parameters of electric energy refer to in particular frequency, voltage, and current.

The electric energy rotating source refers to a unit of the mechanical energy source (usually a steam turbine or an engine, in particular a combustion engine) and of the electric generator (typically a synchronous generator).

The power system refers to a device for electric energy transfer from the point of production (power plant) to the point of consumption. The power plant refers to a complex installation in heart of which is the electric energy rotating source, including all systems needed for operation of the same.

Increasing the service life of electric energy rotating source is achieved by a connection and a micro-grid control method. The function of the active safeguard of the electric energy rotating source against negative electromechanical transients is thereby provided. The transients are excited including, but not limited, by the side of the connected power system. The transients are referred to the electric and mechanical stresses, in particular undesired current and torque changes.

The flexibility of the electric energy rotating source is increased by the method of connection and control of the power semiconductor converter and the electric energy accumulation device. They then act as a secondary electronic controlled electric energy source connected to the common power system interface with the electric energy rotating source. The control system evaluates requirements for the micro-grid power or for the secondary electronic controlled source, and generates a request for the power controller. The evaluation occurs based on a request from superior control system of a power plant or totally independently based on measuring of electric voltages and currents using the measurement block in the power system interface. The secondary electronic controlled electric energy source can operate at much higher control dynamics compared to a conventional electric energy rotating source. Hence, the dynamics of the electric energy rotating source control or of the power plant as a whole is increased. The primary electric energy rotating source (usually in a configuration of a steam turbine and a synchronous generator unit) may operate in this way under optimum operation range without excessively burdening dynamic changes, and accordingly, its service life can be significantly improved.

The micro-grid and its control system are designed so that upon commissioning, a fully independent operation and provision of the active safeguard feature of the electric energy rotating source are possible. It means that the micro-grid and the control system are eligible for operation without the need of connecting to the superior control system of the power plant, or to the control system of the electric energy rotating source. However, unidirectional or bidirectional connection with the superior control system of the power plant is favourable for increased dynamics and precision control while increasing flexibility of the electric energy rotating source, or for diagnostic data communication. The measurement block may be used for operation of the micro-grid even when the electric energy rotating source is out of order at that moment. It means that the micro-grid is adapted to operation with the electric energy rotating source active or inactive.

Communication between the electric energy accumulation device and the power semiconductor converter is provided via the control system or directly between the individual blocks.

### Description of drawings

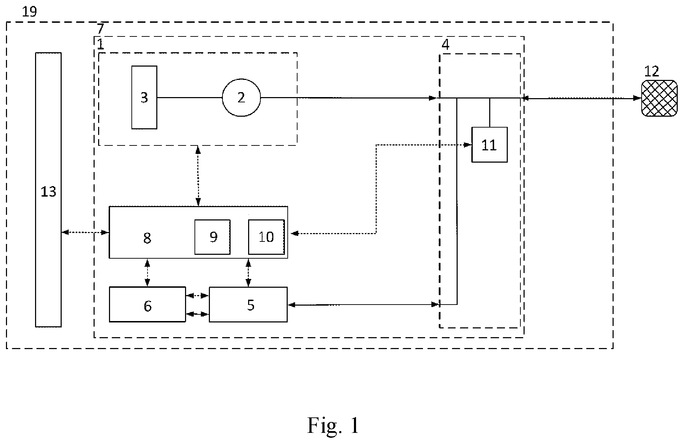

The exemplary embodiment of the proposed solution is described with reference to the drawings where
Fig. 1 - shows a connection of an apparatus for increased service life and flexibility of the electric energy rotating source, wherein the solid line illustrates the power lines and the dotted line illustrates the communication lines;

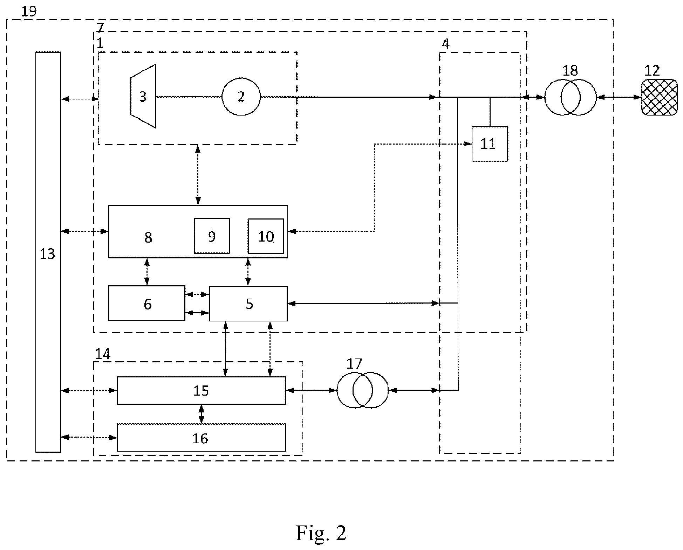

Fig. 2 - shows a connection of the exemplary embodiment of the apparatus for increased service life and flexibility of the electric energy rotating source, wherein the solid line illustrates the power lines and the dotted line illustrates the communication lines;

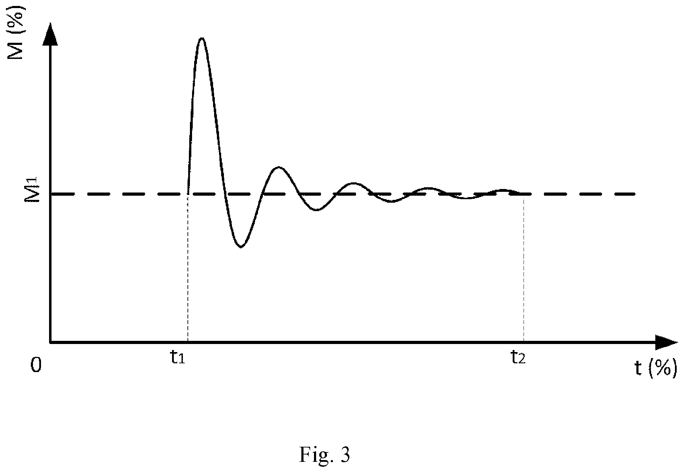

Fig. 3 - shows an exemplary function of the electric energy rotating source active safeguard, wherein the dashed line illustrates a generator electric torque when the active safeguard responds, and the solid line illustrates the generator electric torque without active safeguard intervention - the figure shows ideal curves of the generator torque;

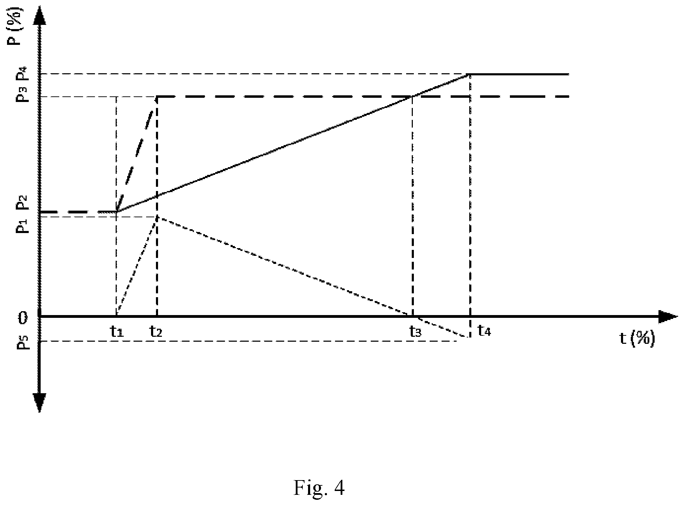

Fig. 4 - shows an exemplary function of the increased flexibility of the electric energy rotating source, wherein the rough dashed line illustrates the total micro-grid power, the solid line illustrates electric energy rotating source power, and the fine dashed line illustrates power taken from the electric energy accumulation device - the figure shows ideal curves of quantities;

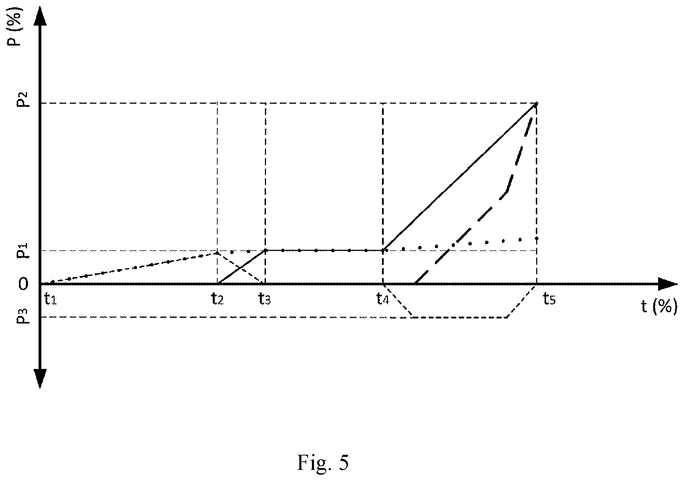

Fig. 5 - shows an exemplary function as a back-up source for cold start, wherein the rough dashed line illustrates the total micro-grid power, the solid line illustrates electric energy rotating source power, the fine dashed line illustrates the electric energy accumulation device power, and the dotted line illustrates the thermal power plant service consumption - the figure shows ideal curves of the quantities.

### Exemplary embodiment of the invention

In the present exemplary embodiment, the apparatus for the increased service life and flexibility of the electric energy rotating source is applied in a system of a thermal power plant 19 - refer to Fig. 2.

A thermal power plant 19 comprises a micro-grid 7 and a service consumption grid 14 being connected in a common power system interface 4. The micro-grid 7 includes an electric energy rotating source 1. In this case, the rotating source 1 is a turbine-generator unit consisting of a mechanical energy source 3 in the form of a steam turbine and synchronous generator 2. Further, the micro-grid 7 includes a control system 8 with an active safeguard 9 and a power controller 10, an electric energy accumulation device 6, and a power semiconductor converter 5. The service consumption grid 14 of the thermal power plant 19 consists of a service consumption 15 and a back-up power 16. The power system interface 4 includes a measurement block 11 and connects to a block transformer 18 to output the thermal power plant 19 power to a power system 12.

The control system 8 of the micro-grid 7 and the control systems of the electric energy rotating source 1 and the service consumption grid 14 are connected to the power plant superior control system 13 via communication lines. Further, the control system 8 of the micro-grid 7 connects by means of communication line to the control system of the electric energy rotating device 1. The service consumption 15 connects to the power semiconductor converter 5 via the communication and power line.

For exemplary function of the active safeguard 9 of the electric energy rotating source 1, refer to Fig. 3. A fast transient (caused e.g., by switching high grid loads with low short-circuit impedance, due to reconfiguration of the power grid while stabilizing the power flows) occurs in the power system 12 at time t1. When the active safeguard 9 of the electric energy rotating source 1 is not active, a transient torque response occurs on the synchronous generator 2. Thereby, the electric energy rotating source 1 is undesirably stressed and its service life reduces. The effects of the transient fade out at time t2. When the active safeguard 9 of the electric energy rotating source 1 is active, the undesired transient is evaluated at time t1 by means of the measurement block 11 and a numerical model of the rotating source 1. By means of the measurement block 11, the active safeguard 9 measures electric voltages and currents in the power system interface 4. These quantities enter in the numerical model of the electric energy rotating source 1. By means of the numerical model solving a system of differential equations, the active safeguard 9 evaluates electric and mechanical stress of the rotating source 1. By means of the power semiconductor converter 5 and the electric energy accumulation device 6, the active safeguard 9 then generates the components of voltages and currents in the power system interface 4. These components counteract the transient that has negative impact on the service life of the electric energy rotating source 1. Ideally, the active safeguard 9 suppresses the transient in the synchronous generator 2, which is obvious from the torque curves in Fig. 3. The exemplary function for increasing the flexibility of the electric energy rotating source (e.g., support service start-up speed) is shown in Fig. 4. At time t1, there is a request for change to the electric energy rotating source 1 power from P2 value to P3 value. The electric energy accumulation device 6 and the power semiconductor converter 5 accommodate the power request by change to their power to P1 value at time t2. Thereafter, its power decreases correspondingly to increasing power of the electric energy rotating source 1. At time t3, the electric energy rotating source 1 assumes accommodating of the full power request, and ramps up to the power P3 value. Subsequently, at time t3, the electric energy accumulation device 6 recharges as well. This is done by further increasing of the electric energy rotating source 1 power to P4 value and equivalent reduction of the electric energy accumulation device 6 power and of the power semiconductor converter 5 to a negative P5 value. A rate of change to the electric energy accumulation device 6 and of the power semiconductor converter 5 power to adjust the recharge value must not be higher than maximum rate of change to the electric energy rotating source 1 power.

For exemplary function of the electric energy accumulation device 6 and the power semiconductor converter 5 as a back-up device for cold start of the thermal power plant 19, refer to Fig. 5. Beginning of the cold start occurs at time t1, where the service consumption 15 power increases from zero to P1 value. The power is fully accommodated by the electric energy accumulation device 6 and the power semiconductor converter 5. At time t2, phasing-in of the synchronous generator 2 and starting-up the electric energy rotating source 1 to the power P1 value needed for the service consumption 15 powering occurs. The electric energy rotating source 1 achieves the power P1 value at time t3. Correspondingly to this, the electric energy accumulation device 6 and the power semiconductor converter 5 power reduces to zero being reached at time t3. For technological reasons, the electric energy rotating source 1 power is maintained at the value P1 of the service consumption between times t3 and t4. When ramping up the electric energy rotating source 1 to the required power P2 value between times t4 and t5, the electric energy accumulation device 6 recharges. Thereby, the electric energy accumulation device 6 and the power semiconductor converter 5 power drops to negative P3 value. At time t5, the electric energy accumulation device 6 is recharged, and the electric energy rotating source 1 power equals to total power of the micro-grid 7.

### List of reference numerals

- 1: electric energy rotating source
- 2: electric generator
- 3: mechanical energy source
- 4: power system interface
- 5: power semiconductor converter
- 6: electric energy accumulation device
- 7: micro-grid
- 8: control system
- 9: rotating source active safeguard
- 10: power controller
- 11: measurement block
- 12: power system
- 13: power plant superior control system
- 14: service consumption grid
- 15: service consumption
- 16: back-up power
- 17: service consumption grid transformer
- 18: block transformer
- 19: power plant

## Claims

1. A method of controlling an apparatus for increasing service life and flexibility of an electric energy rotating source (1) where a power semiconductor converter (5) and an electric energy accumulation device (6) are used, by means of a measurement block (11) an active safeguard (9) measures electric voltages and currents in a power system interface (4) while the rotating source (1) is in operation, the measured quantities of electric voltages and currents are input to a numerical model of the electric energy rotating source (1) being calculated in real time in the active safeguard (9), wherein by solving a system of differential equations in the numerical model, electric and mechanical stresses of the rotating source (1) are evaluated in the form of changes to voltages, currents and an electric generator (2) torque, and by means of the power semiconductor converter (5) and the electric energy accumulation device (6), the components of voltages and currents are generated in the power system interface (4) as calculated by the active safeguard (9) that counteract the undesirable changes to voltage, current and the electric generator (2) torque.

2. The method according to claim 1 **characterized in that** the requests for a micro-grid (7) power are evaluated and/or the request for a power controller (10) are generated by a control system (8) not connected to a power plant superior control system (13) based on measurement of electric voltages and currents by means of the measurement block (11) in the power system interface (4).

3. An apparatus for carrying out the method of control for increasing service life and flexibility of the electric energy rotating source (1) according to any of preceding claims wherein the apparatus is a micro-grid (7) and includes the electric energy rotating source (1) comprising an electric generator (2) connected to a mechanical energy source (3) and wherein the micro-grid (7) further includes a power semiconductor converter (5), an electric energy accumulation device (6), a control system (8) to control the micro-grid (7), a measurement block (11) and a power system interface (4),
wherein the control system (8) comprises a power controller (10) where the measurement inputs of the power controller (10) are connected to the measurement block (11) being connected to the power system interface (4), by means of which the micro-grid (7) is connected to a power system (12),
wherein the electric energy rotating source (1) is connected to the power system interface (4) jointly with a power semiconductor converter (5) output while a power semiconductor converter (5) input is connected to the electric energy accumulation device (6),
wherein the control system (8) further comprises an active safeguard (9) of the electric energy rotating source (1) against transient electromechanical stress, wherein the active safeguard (9) comprises a numerical model of the electric energy rotating source (1) being calculated in real time and the measurement inputs of the active safeguard (9) are connected to the measurement block (11),
wherein the numerical model is adapted to receive measured quantities of voltages and currents and to solve a system of differential equations to evaluate electric and mechanical stresses of the electric energy rotating source (1) in the form of changes to voltages, currents and the electric generator (2) torque,
and the active safeguard (9) is adapted to generate, by means of the power semiconductor converter (5) and the electric energy accumulation device (6), voltage and current components in the power system interface (4) that counteract the electric and mechanical stress of electric energy rotating source that negatively influences the service life of the rotating source (1).

4. The apparatus according to claim 3 **characterized in that** the control system (8) is connected to a power plant superior control system (13) by means of unidirectional or bidirectional communication line.

5. The apparatus according to claims 3 and 4 **characterized in that** the mechanical energy source (3) consists of a turbine or a combustion engine.

6. The apparatus according to claims 3, 4, and 5 **characterized in that** the electric energy accumulation device (6) consists of an electrochemical or a mechanical accumulator.

## Patentansprüche

1. Ein Verfahren zur Steuerung einer Vorrichtung zur Verlängerung der Lebensdauer und Flexibilität einer rotierenden elektrischen Energiequelle (1), bei dem ein Leistungshalbleiterwandler (5) und ein elektrisches Energiespeichergerät (6) verwendet werden, wobei ein Messblock (11) eine aktive Schutzvorrichtung (9) elektrische Spannungen und Ströme in einer Netzschnittstelle (4) misst, während die rotierende elektrische Energiequelle (1) in Betrieb ist, die gemessenen elektrischen Spannungen und Ströme werden in ein numerisches Modell der rotierenden elektrische Energiequelle (1) eingespeist, das in Echtzeit in der aktiven Schutzvorrichtung (9) berechnet wird, durch Lösen eines Systems von Differentialgleichungen im numerischen Modell werden elektrische und mechanische Belastungen der rotierenden elektrischen Energiequelle (1) in Form von Änderungen der Spannungen, Ströme und des Drehmoments des elektrischen Generators (2) bewertet, und Mittels des Leistungshalbleiterwandlers (5) und des elektrischen Energiespeichergeräts (6) werden in der Netzschnittstelle (4) die von der aktiven Schutzvorrichtung (9) berechneten Spannungs- und Stromkomponenten erzeugt, die die unerwünschten Änderungen der Spannung, des Stroms und des Drehmoments des elektrischen Generators (2) entgegenwirken.

2. Das Verfahren nach Anspruch 1, **dadurch gekennzeichnet, dass** Anforderungen an ein Mikro-Netz (7) bewertet und/oder Anforderungen an einen Leistungsregler (10) durch ein Steuersystem (8), das nicht mit einem übergeordneten Steuerungssystem (13) des Kraftwerks verbunden ist, generiert werden, basierend auf der Messung elektrischer Spannungen und Ströme durch den Messblock (11) in der Netzschnittstelle (4).

3. Eine Vorrichtung zur Durchführung des Steuerungsverfahrens zur Verlängerung der Lebensdauer und Flexibilität der rotierenden elektrischen Energiequelle (1) gemäß einem der vorangehenden Ansprüche, wobei die Vorrichtung ein Mikro-Netz (7) ist und die rotierende elektrische Energiequelle (1) umfasst, die einen elektrischen Generator (2) umfasst, der mit einer mechanischen Energiequelle (3) verbunden ist, und wobei das Mikro-Netz (7) ferner einen Leistungshalbleiterwandler (5), ein elektrisches Energiespeichergerät (6), ein Steuersystem (8) zur Steuerung des Mikro-Netzes (7), einen Messblock (11) und eine Netzschnittstelle (4) umfasst, wobei das Steuersystem (8) einen Leistungsregler (10) umfasst, bei dem die Messeingänge des Leistungsreglers (10) mit dem Messblock (11) verbunden sind, der mit der Netzschnittstelle (4) verbunden ist, durch die das Mikro-Netz (7) an ein Stromnetz (12) angeschlossen ist, wobei die rotierende elektrische Energiequelle (1) mit der Netzschnittstelle (4) zusammen mit einem Ausgang des Leistungshalbleiterwandlers (5) verbunden ist, während ein Eingang des Leistungshalbleiterwandlers (5) mit dem elektrischen Energiespeichergerät (6) verbunden ist, wobei das Steuersystem (8) ferner einen aktiven Schutz (9) der rotierenden elektrischen Energiequelle (1) gegen vorübergehende elektromechanische Belastungen umfasst, wobei der aktive Schutz (9) ein numerisches Modell der rotierenden elektrischen Energiequelle (1) umfasst, das in Echtzeit berechnet wird und die Messeingänge des aktiven Schutzes (9) mit dem Messblock (11) verbunden sind, wobei das numerische Modell so angepasst ist, dass es gemessene Größen von Spannungen und Strömen empfängt und ein System von Differentialgleichungen löst, um elektrische und mechanische Belastungen der rotierenden elektrischen Energiequelle (1) in Form von Spannungs-, Strom- und Drehmomentänderungen des Generators (2) zu bewerten, und der aktive Schutz (9) so angepasst ist, dass er mittels des Leistungshalbleiterwandlers (5) und des elektrischen Energiespeichergeräts (6) Spannungs- und Stromkomponenten in der Netzschnittstelle (4) erzeugt, die den elektrischen und mechanischen Belastungen der rotierenden elektrischen Energiequelle entgegenwirken, die die Lebensdauer der rotierenden elektrischen Energiequelle (1) negativ beeinflussen.

4. Die Vorrichtung nach Anspruch 3, **dadurch gekennzeichnet, dass** das Steuersystem (8) mit einem übergeordneten Steuerungssystem (13) des Kraftwerks über eine unidirektionale oder bidirektionale Kommunikationsleitung verbunden ist.

5. Die Vorrichtung nach den Ansprüchen 3 und 4, **dadurch gekennzeichnet, dass** die mechanische Energiequelle (3) aus einer Turbine oder einem Verbrennungsmotor besteht.

6. Die Vorrichtung nach den Ansprüchen 3, 4 und 5, **dadurch gekennzeichnet, dass** das elektrische Energiespeichergerät (6) aus einem elektrochemischen oder einem mechanischen Akkumulator besteht.

## Revendications

1. Un procédé de contrôle d'un appareil pour augmenter la durée de vie et la flexibilité d'une source d'énergie électrique rotative (1) utilisant un convertisseur de puissance à semi-conducteurs (5) et un dispositif d'accumulation d'énergie électrique (6) sont utilisés, selon lequel un bloc de mesure (11) permet à une protection active (9) de mesurer les tensions et courants électriques dans une interface du système de puissance (4) lorsque la source rotative (1) est en fonctionnement, les quantités mesurées de tensions et courants électriques sont introduites dans un modèle numérique de la source d'énergie électrique rotative (1) calculé en temps réel dans la protection active (9), où, en résolvant un système d'équations différentielles dans le modèle numérique, les contraintes électriques et mécaniques de la source rotative (1) sont évaluées sous forme de modifications de tensions, courants et du couple du générateur électrique (2), par l'intermédiaire du convertisseur de puissance à semi-conducteurs (5) et du dispositif d'accumulation d'énergie électrique (6), les composants de tension et de courant sont générés dans l'interface du système de puissance (4) comme calculé par la protection active (9) pour contrer les modifications indésirables de tension, de courant et du couple du générateur électrique (2).

2. Le procédé selon la revendication 1, **caractérisé en ce que** les demandes de puissance pour un micro-réseau (7) sont évaluées et/ou les demandes pour un contrôleur de puissance (10) sont générées par un système de contrôle (8) non connecté à un système de contrôle supérieur de la centrale électrique (13), basé sur la mesure des tensions et courants électriques par le bloc de mesure (11) dans l'interface du système de puissance (4).

3. Un appareil pour effectuer le procédé de contrôle pour augmenter la durée de vie et la flexibilité de la source d'énergie électrique rotative (1) selon l'une des revendications précédentes, dans lequel l'appareil est un micro-réseau (7) et comprend la source d'énergie électrique rotative (1) comprenant un générateur électrique (2) connecté à une source d'énergie mécanique (3), et dans lequel le micro-réseau (7) comprend en outre un convertisseur de puissance à semi-conducteurs (5), un dispositif d'accumulation d'énergie électrique (6), un système de contrôle (8) pour contrôler le micro-réseau (7), un bloc de mesure (11) et une interface du système de puissance (4), dans lequel le système de contrôle (8) comprend un contrôleur de puissance (10) où les entrées de mesure du contrôleur de puissance (10) sont connectées au bloc de mesure (11) connecté à l'interface du système de puissance (4), par laquelle le micro-réseau (7) est connecté à un système de puissance (12), dans lequel la source d'énergie électrique rotative (1) est connectée à l'interface du système de puissance (4) conjointement avec une sortie du convertisseur de puissance à semi-conducteurs (5) tandis qu'une entrée du convertisseur de puissance à semi-conducteurs (5) est connectée au dispositif d'accumulation d'énergie électrique (6), le système de contrôle (8) comprend en outre une protection active (9) de la source d'énergie électrique rotative (1) contre le stress électromécanique transitoire, dans lequel la protection active (9) comprend un modèle numérique de la source d'énergie électrique rotative (1) calculé en temps réel et les entrées de mesure de la protection active (9) sont connectées au bloc de mesure (11), dans lequel le modèle numérique est adapté pour recevoir les quantités mesurées de tensions et de courants et pour résoudre un système d'équations différentielles afin d'évaluer les contraintes électriques et mécaniques de la source d'énergie électrique rotative (1) sous forme de modifications des tensions, des courants et du couple du générateur électrique (2), et la protection active (9) est adaptée pour générer, au moyen du convertisseur de puissance à semi-conducteurs (5) et du dispositif d'accumulation d'énergie électrique (6), des composants de tension et de courant dans l'interface du système de puissance (4) qui contrent le stress électrique et mécanique de la source d'énergie électrique rotative qui influence négativement la durée de vie de la source rotative (1).

4. L'appareil selon la revendication 3, **caractérisé en ce que** le système de contrôle (8) est connecté au système de contrôle supérieur de la centrale électrique (13) par une ligne de communication unidirectionnelle ou bidirectionnelle.

5. L'appareil selon les revendications 3 et 4, **caractérisé en ce que** la source d'énergie mécanique (3) consiste en une turbine ou un moteur à combustion.

6. L'appareil selon les revendications 3, 4 et 5, **caractérisé en ce que** le dispositif d'accumulation d'énergie électrique (6) consiste en un accumulateur électrochimique ou mécanique.
